# FASCICULE DE BREVET EUROPEEN

(11) **EP 2 028 946 B1**
(45) Date de publication et mention de la délivrance du brevet: **29.04.2015**
(21) Numéro de dépôt: 07803927.8
(22) Date de dépôt: 22.06.2007
(51) Int. Cl.: A22C 21/00

(54) **DISPOSITIF DE BRIDAGE INDUSTRIEL D'UNE VOLAILLE**
VORRICHTUNG ZUM INDUSTRIELLEN BÜNDELN VON GEFLÜGEL
DEVICE FOR INDUSTRIALLY TRUSSING A FOWL

(30) Priorité: 22.06.2006 FR 0652602
(43) Date de publication de la demande: 04.03.2009
(73) Titulaire: Emsens Antoine, 42490 Fraisses (FR)
(72) Inventeur: PAYA, Denis, 42380 Perigneux (FR)
(74) Mandataire: Thivillier, Patrick
(86) Numéro de dépôt international: PCT/FR2007/051504
(87) Numéro de publication internationale: WO 2007/148030

(56) Documents cités:
- EP-A- 0 413 629
- FR-A- 2 753 604
- FR-A1- 2 653 301
- FR-A1- 2 724 294
- FR-A1- 2 847 123

## Description

L'invention se rattache au secteur technique du bridage industriel des volailles préalablement abattues et plumées, notamment celles du type poulet.

L'invention concerne un procédé et un dispositif de bridage automatique et la machine mettant en oeuvre ce dispositif et ce procédé.

Le plus souvent, le bridage d'une volaille est effectué d'une manière manuelle au moyen d'un lien élastique sous forme d'une boucle convenablement disposée aux niveaux dorsal et ventral de la volaille afin de maintenir les membres plaqués contre le corps de ladite volaille. Par exemple, le lien passe par l'abdomen et l'intérieur des cuisses et contourne le croupion, en maintenant l'extrémité des pattes appliquées contre ce dernier.

On a proposé d'automatiser cette opération de bridage manuel. Par exemple, une solution ressort de l'enseignement du brevet GB 2.232.115 dont les moyens de mise en oeuvre ont pour fonction de reproduire les gestes de l'opérateur dans le cas d'un bridage manuel.

D'autres solutions techniques permettant de mécaniser le procédé de bridage ont été proposées. Par exemple, on peut citer :
- Le brevet FR 2.653.301 qui concerne un dispositif sous forme d'un ensemble support recevant la volaille et monté pivotant dans un équipage mobile monté avec capacité de rotation par rapport à un système de pince coopérant avec un lien élastique.
- Le brevet EP 0 413 629 qui concerne un procédé d'installation pour la conformation des pattes et le bridage des volailles.
- Le brevet FR 2.724.294 qui concerne une machine pour le bridage de volaille au moyen d'une boucle sous forme d'un lien souple élastique enserrant un support apte à retenir la volaille, le support constituant un volume ouvert faisant office de contre forme correspondant à un type déterminé de volaille.
- Le brevet FR 2.847.123 qui décrit un procédé selon lequel on positionne la volaille en appui dorsal dans un support pré-équipé d'un lien élastique sous forme d'une boucle. Le support avec la volaille est déplacé en direction d'un poste de bridage, puis en direction d'un poste d'évacuation et de transfert de la volaille. Le support vide est ensuite soumis à un poste apte à l'équiper d'un autre lien pour un cycle suivant.
- **Le brevet** FR 2.753.604**, qui concerne une machine pour brider de la volaille tuée, au moyen d'un élastique qui s'étend au-dessous de la partie arrière du dos de la volaille, ledit élastique serrant les pattes contre la face interne du dos pour ensuite entourer le corps le long du ventre et le long ou au-dessous des épaules.**

Il ressort de l'enseignement de ces brevets que les différentes solutions techniques proposées sont relativement complexes et ne permettent pas des cadences de production élevées. On observe également que, très souvent, ces machines ne permettent de traiter qu'un type de volailles parfaitement calibrées, ne tolérant par conséquent que de faibles écarts entre les différentes volailles à brider. Des difficultés peuvent cas, peut avoir tendance à échapper une partie de la volaille.

L'invention s'est fixée pour but de remédier à ces inconvénients d'une manière simple, sûre, efficace et rationnelle.

A partir de cet état de la technique, le problème que se propose de résoudre l'invention est de pouvoir traiter différentes tailles et morphologies de volailles, tout en assurant un maintien parfait du lien élastique, comme c'est le cas lorsque le bridage est effectué d'une manière manuelle.

Pour résoudre un tel problème, il a été conçu et mis au point un **dispositif** de bridage industriel des volailles selon les **caractéristiques de la revendication 1,** ainsi que l'application dudit dispositif à une machine selon les caractéristiques de la revendication 6

Il ressort de ces caractéristiques que l'on n'intervient pas directement sur la volaille pour son bridage, mais sur les éléments constitutifs du support permettant par conséquent de s'affranchir des écarts dimensionnels entre les différentes volailles à brider.

Avantageusement, pour résoudre le problème posé de bien plaquer les pattes et les cuisses contre le corps de la volaille, le support présente une partie faisant office de réceptacle pour le positionnement et le logement des extrémités des articulations des cuisses et du croupion.

Pour résoudre le problème posé de parfaitement maintenir la volaille en position pendant l'opération de bridage en tant que telle, le support présente un crochet pivotant apte à enserrer le croisement des brins du lien et à pénétrer partiellement dans la chair de la volaille.

Pour résoudre le problème posé de soumettre le lien élastique sous forme d'une boucle aux différents mouvements nécessaires permettant d'assurer le bridage de la volaille, d'une manière similaire aux opérations de bridage réalisées manuellement, la pince présente une tête rotative avec des bras montés avec capacité de déplacement en hauteur et d'écartement, les bras étant équipés à leur base de doigts de préhension coopérant avec le lien élastique.

Avantageusement, pour résoudre le problème posé de compacter la volaille pendant l'opération de bridage, au niveau de l'extrémité libre du support, sont disposés des patins d'appui aptes à coopérer avec les ailes pour les maintenir plaquées contre le poitrail.

Pour résoudre le problème posé de positionner le lien élastique sous forme d'une boucle par rapport au support équipé de la volaille, l'organe préhenseur comprend des tiges délimitant un volume fermé apte à enserrer la section du support et de la volaille, lesdites tiges recevant plusieurs liens élastiques en forme de boucles, l'organe préhenseur étant assujetti à des moyens de déplacement en translation.

Selon une autre caractéristique, le procédé et le dispositif de bridage selon l'invention trouve une application dans le cas d'une machine comprenant un poste d'alimentation d'une volaille sur le support, un poste de bridage et un poste d'éjection et d'évacuation de la volaille bridée, au moins un support étant présenté successivement à chacun des postes à partir d'un carrousel.

L'invention est exposée ci-après plus en détail à l'aide des figures des dessins annexés dans lesquels :
- les figures 1 à 11 sont des vues en perspective montrant les principales phases du **procédé** de bridage et les moyens de mise en oeuvre du dispositif **selon l'invention ;**

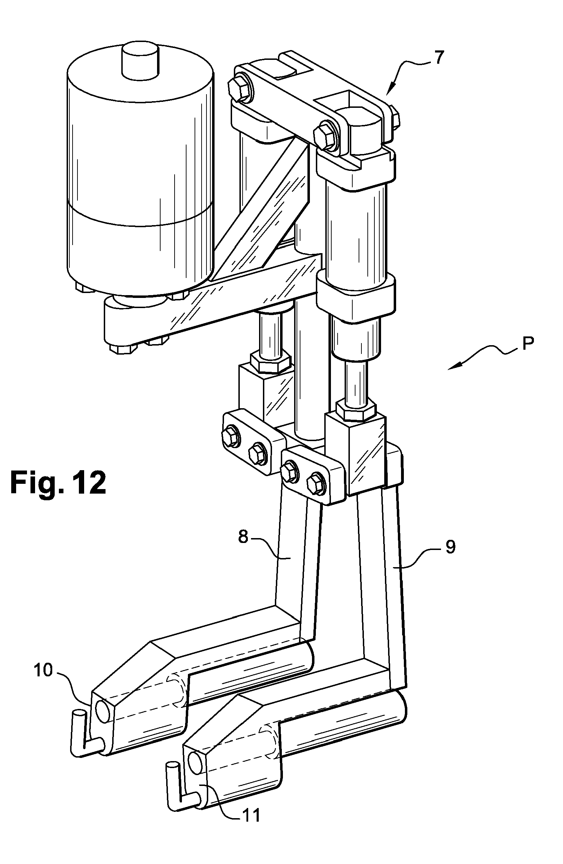

- la figure 12 est une vue en perspective de la pince ;

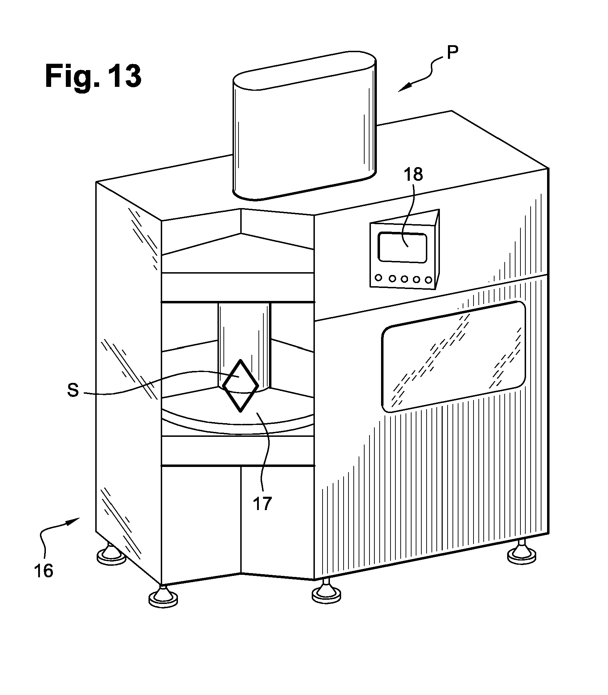

- la figure 13 est une vue en perspective d'un exemple de réalisation d'une conception de machine pour l'application du procédé et dispositif de bridage, selon l'invention.

Le dispositif de bridage selon l'invention est réalisé à partir d'un support (S) sur lequel est positionné, en appui dorsal, une volaille (V). Le support (S) est composé de plusieurs tiges (1) rectilignes et parallèles. Ces différentes tiges (1) sont fixées à l'une de leur extrémité sur une semelle verticale (2) que présente une partie du bâti (3) d'une machine. Les différentes tiges (1) sont convenablement positionnées par rapport à la semelle (2) de manière à former un berceau d'appui.

D'ores et déjà, on voit que cette conception du support permet de positionner des volailles de calibre différent étant donné que le support est largement ouvert.

Une plaque d'appui profilée (4), sur laquelle repose une partie de la volaille (V), est montée avec capacité de déplacement en translation guidée par rapport aux tiges (1). Comme il sera indiqué dans la suite de la description, cette plaque d'appui (4) constitue un moyen de poussée d'un lien élastique (5), tout en provoquant, d'une manière concomitante, l'éjection de la volaille.

En regard et en alignement de l'ensemble support (S), le dispositif comprend un organe écarteur et préhenseur (6) apte à amener un lien élastique (5), sous forme d'une boucle, autour du support (S) et de la volaille (V). Cet organe préhenseur (6) comprend plusieurs tiges (6a) (quatre par exemple), délimitant un volume fermé apte à enserrer la section du support (S) tel que défini et la volaille (V). Les tiges (6a) reçoivent plusieurs liens élastiques (5) en forme de boucle. L'ensemble de l'organe préhenseur (6) est assujetti à des moyens de déplacement en translation guidée (vérin par exemple).

L'opération de bridage en tant que telle s'effectue au moyen d'une pince (P). Cette pince (P) est assujettie à des moyens de commande pour être déplacée selon les trois axes (X, Y, Z) afin de, successivement :
- étirer vers le haut le lien élastique (5) par rapport au support (S) ;
- soumettre le lien (5) à un mouvement de pivotement et de torsion de manière à croiser ses brins, sensiblement sous forme d'un 8 ;
- positionner le lien (5) au-dessus du poitrail, au niveau du bréchet ;
- rabaisser le lien pour sa mise en place autour du coffre et des ailes de la volaille (V).

Ces différentes opérations, pour le bridage automatique de la volaille (V), au moyen du lien (5), à partir du support (S), seront analysées plus en détail dans la suite de la description.

La pince (P) présente une tête rotative (7) avec des bras (8) et (9) montés avec capacité de déplacement en hauteur et d'écartement angulaire. Les bras (8) et (9) sont équipés à leur base de doigts de préhension (10) et (11) coopérant avec une partie du lien élastique (5).

Au niveau de l'extrémité libre du support (S), le dispositif comprend des patins d'appui (12) et (13) aptes à coopérer avec les ailes de la volaille pour les maintenir plaquées contre le poitrail pendant l'opération de bridage en tant que telle.

Selon une autre caractéristique, l'ensemble support (S) présente une partie (14) faisant office de réceptacle pour le positionnement et le logement des extrémités des articulations des cuisses et du croupion de la volaille.

De même, d'une manière importante, le support (S) présente un crochet pivotant (15) apte à enserrer une partie du lien en cours du bridage et à pénétrer partiellement dans la chair de la volaille pour parfaitement maintenir cette dernière en position, pendant l'opération de bridage.

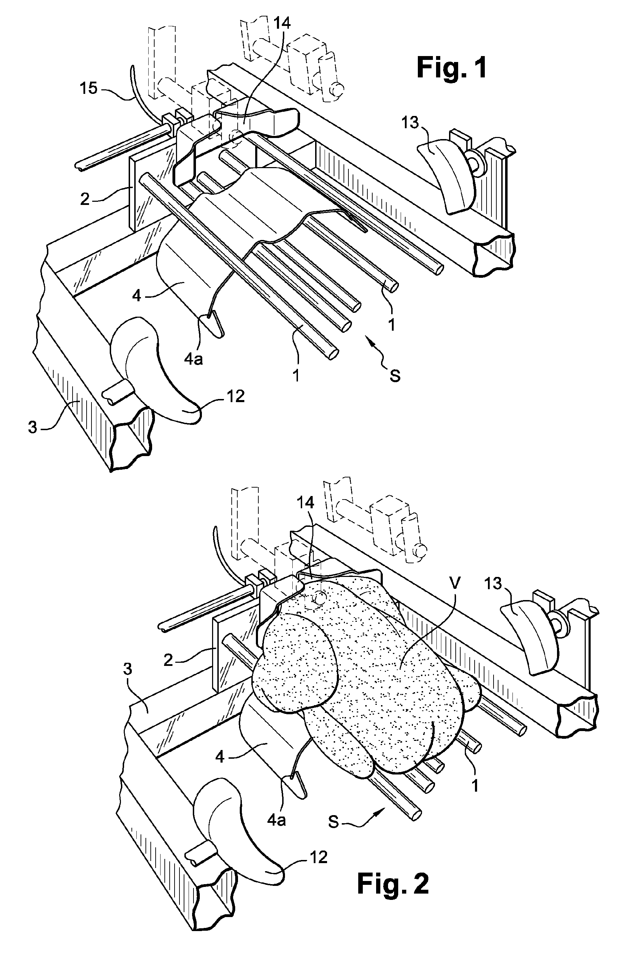

On se réfère aux figures 1 à 11 qui montrent les principales phases du procédé de bridage selon l'invention compte tenu des moyens de mise en oeuvre du dispositif.

La volaille (V) est mise en place et positionnée manuellement ou automatiquement en appui dorsal sur le support (S). Notamment, la volaille est positionnée en appui sur la plaque profilée (4) et maintenue en position par les différentes tiges (1) (figure 2).

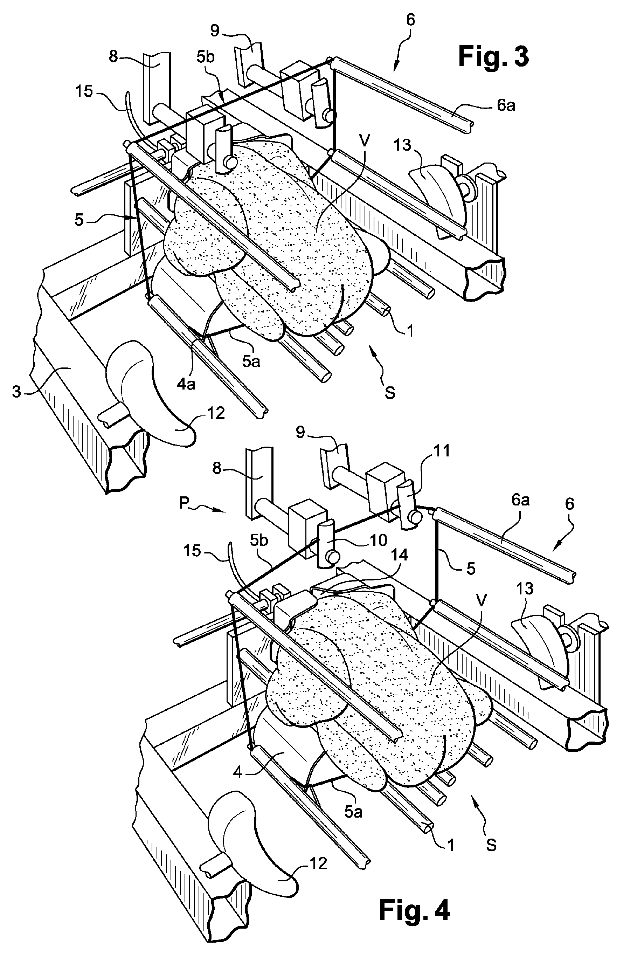

On agit sur l'organe préhenseur (6) pour positionner un lien élastique (5) autour du support (S) et de la volaille (V) au niveau de l'arrière des cuisses de ladite volaille. Le lien (5), en combinaison avec les tiges (6a) de l'organe préhenseur (6) constitue une boucle ouverte. Le brin inférieur (5a) du lien (5) est maintenu en arrière, sensiblement au niveau des cuisses de la volaille, par une échancrure (4a) que présente la plaque d'appui (4) du support (figure 3).

La pince (P) est ensuite actionnée. Les bras (8) et (9) de la pince sont ensuite déplacés vers le haut pour étirer, d'une manière concomitante, le lien à partir du brin (5b), le lien étant maintenu par rapport à l'échancrure (4a) de la plaque (4) du support (figure 4).

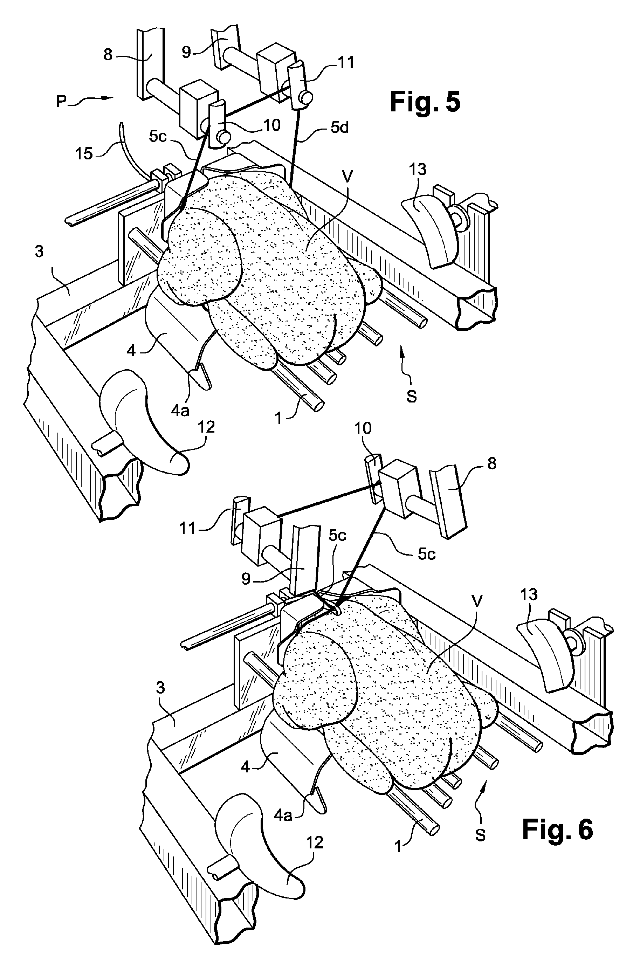

On retire ensuite l'organe préhenseur (6), ce qui a pour effet de libérer le lien (5) qui échappe les agencements (4a) de la plaque (4) pour venir se positionner contre les cuisses (figure 5). La pince (P) est ensuite soumise à un mouvement de rotation de 180°, de manière à croiser les brins (5c) et (5d) du lien élastique. Autrement dit, cette action de pivotement de la pince a pour effet de former sensiblement un 8 permettant d'enserrer les articulations des cuisses. Dans cette position de croisement des brins (5c) et (5d), on rabat ensuite le crochet pivotant (15) qui pénètre la chair de la volaille (figure 6). Le crochet (15) a donc pour effet de maintenir le croisement des brins (5c) et (5d) entre le croupion et le bréchet (la position finale du croisement étant à la fin du bridage sous le bréchet), et de maintenir en position la volaille par rapport à l'ensemble du support (S).

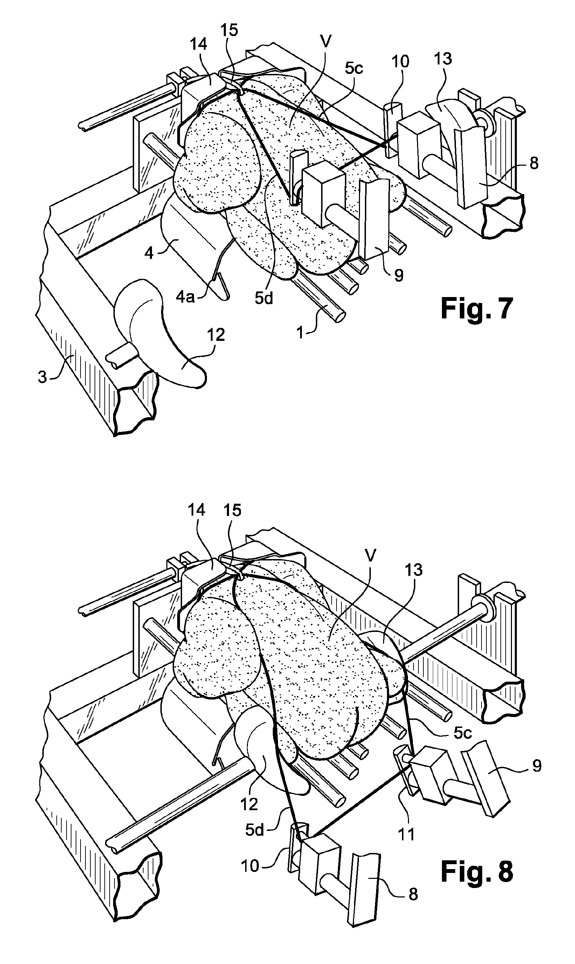

La pince (P), toujours dans la même orientation angulaire que par rapport à la figure 6, est ensuite déplacée linéairement en translation, de manière à positionner le lien (5) au-dessus du poitrail, au niveau du bréchet (figure 7), le croisement des brins étant toujours maintenus par le crochet (15).

Les patins d'appui (12) et (13) sont actionnés pour plaquer et maintenir les ailes au niveau du poitrail. La pince (P) est rabaissée, tandis que ses bras (8) et (9) sont écartés angulairement et les crochets (10) et (11) pivotés pour mettre en place le lien autour du coffre et des ailes (figure 8).

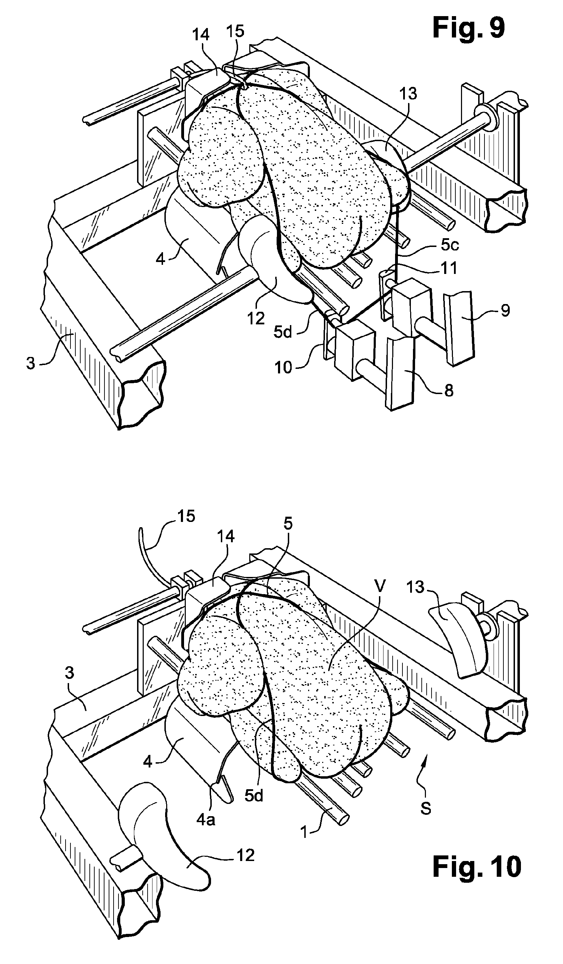

Les bras (8) et (9) sont ensuite rapprochés angulairement en position basse de la pince (figure 9), puis les patins d'appui (12) et (13) et la pince (P) sont escamotés libérant ainsi totalement le lien qui finit d'enserrer la volaille au niveau des ailes et du bréchet. Le crochet (15) est également pivoté en arrière pour libérer la volaille (figure 10).

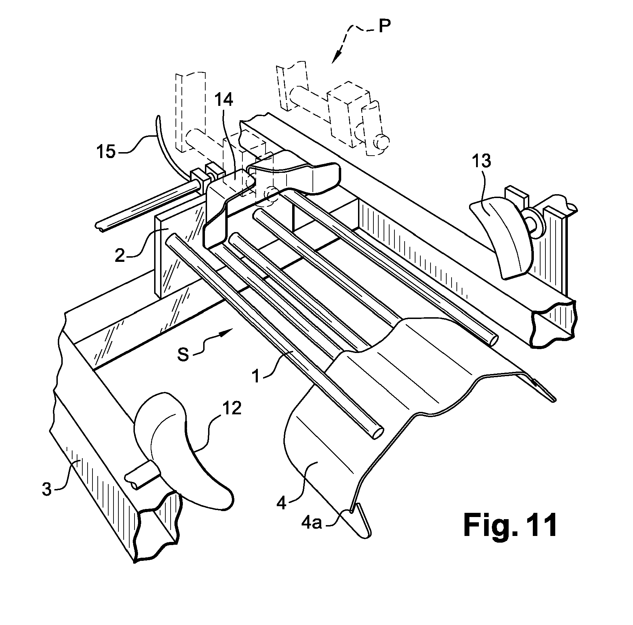

Le bridage en tant que tel est terminé. La plaque d'appui (4) est déplacée linéairement en translation afin de pousser le lien (5) au niveau du dos et provoquer, d'une manière concomitante, l'éjection de la volaille par rapport au support (S) (figure 11).

Le procédé et le dispositif de bridage selon l'invention trouvent une application avantageuse dans le cas d'une machine (16) comprenant un poste d'alimentation d'une volaille sur le support (S), un poste de bridage avec notamment la pince (P) et l'organe préhenseur des liens élastiques (5), et un poste d'éjection et d'évacuation de la volaille bridée. Dans cette conception, au moins un support est présenté successivement à chacun des postes précités à partir d'un ensemble (17) formant carrousel.

A noter qu'avec ce type de machine, le crochet pivotant (15) peut être indépendant du support (S) et fixé sur une colonne en position verticale au niveau du poste de bridage.

Bien évidemment, les différents moyens du dispositif de bridage selon l'invention, sont asservis à tout ensemble de programmation et de temporisation (18), afin d'assurer le cycle de fonctionnement tel que décrit depuis la mise en place de la volaille sur le support, le bridage de la volaille et l'évacuation de la volaille.

Les avantages ressortent bien de la description, en particulier on souligne et on rappelle :
- la grande flexibilité permettant de traiter différentes tailles et morphologies de volailles, le bridage étant effectué à partir d'éléments constitutifs du support et non pas directement sur la volaille ;
- l'efficacité du résultat obtenu, le lien après bridage étant parfaitement en place et maintenu par rapport aux parties constitutives de la volaille ;
- la cadence de production élevée ;
- la compacité de la machine appliquant le procédé et le dispositif de bridage

## Revendications

1. Dispositif de bridage industriel d'une volaille (V), comprenant:
- un support ouvert (S) constitué de tiges rectilignes et parallèles (1) disposées dans l'espace de manière à former un berceau d'appui pour recevoir en appui dorsal une volaille, les tiges (1) recevant, sur une partie de leur longueur, un moyen (4) sous forme d'une plaque d'appui profilée présentant des agencements d'accrochage temporaire du lien, ladite plaque d'appui (4) étant montée avec capacité de déplacement en translation guidé par rapport aux tiges (1) pour pousser le lien et provoquer l'éjection de la volaille ;
- un organe préhenseur et écarteur (6) apte à amener un lien élastique (5) sous forme d'une boucle, autour du support et de la volaille ;
- une pince (P) assujettie à des moyens de commande pour être déplacée selon les trois axes X - Y - Z, afin de successivement :
▪ étirer vers le haut le lien élastique (5) par rapport au support (S) ;
▪ soumettre le lien (5) à un mouvement de pivotement, de manière à croiser ses brins sensiblement sous forme d'un huit ;
▪ positionner le lien au-dessus du poitrail au niveau du bréchet ;
▪ rabaisser le lien pour sa mise en place autour du coffre et des ailes ;
- un crochet pivotant(15) apte à enserrer le croisement des brins du lien et à pénétrer partiellement dans la chair de la volaille.
- un moyen pour pousser le lien (5) au niveau du dos et provoquer, d'une manière concomitante, l'éjection de la volaille par rapport audit support (S).

2. Dispositif selon la revendication 1, **caractérisé en ce que** le support (S) présente une partie (14) faisant office de réceptacle pour le positionnement et le logement des extrémités des articulations des cuisses et du croupion.

3. Dispositif selon la revendication 1, **caractérisé en ce que** la pince (P) présente une tête rotative (7) avec des bras (8) et (9) montés avec capacité de déplacement en hauteur et d'écartement, les bras (8) et (9) étant équipés à leur base de doigts de préhension (10) et (11) coopérant avec le lien élastique (5).

4. Dispositif selon la revendication 1, **caractérisé en ce que**, au niveau de l'extrémité libre du support, sont disposés des patins (12) et (13) d'appui aptes à coopérer avec les ailes pour les maintenir plaquer contre le poitrail.

5. Dispositif selon la revendication 1, **caractérisé en ce que** l'organe préhenseur et écarteur (6) comprend des tiges (6a) délimitant un volume fermé apte à enserrer la section du support et de la volaille, lesdites tiges recevant plusieurs liens élastiques en forme de boucles, l'organe préhenseur et écarteur (6) étant assujetti à des moyens de déplacement en translation.

6. Application du dispositif selon l'une quelconque des revendications 1 à 5 à une machine comprenant un poste d'alimentation d'une volaille sur le support (S), un poste de bridage et un poste d'éjection et d'évacuation de la volaille bridée, au moins un support étant présenté successivement à chacun des postes à partir d'un carrousel.

## Patentansprüche

1. Industrielle Haltevorrichtung eines Geflügels (V) umfassend
- einen offenen Träger (S), der aus geraden und parallelen Stangen (1) gebildet ist, die im Raum derart angeordnet sind, dass ein Stützgestell gebildet wird, um in Rückenstütze eines Geflügels aufzunehmen, wobei die Stangen (1) auf einem Teil ihrer Länge ein Mittel (4) in Form einer profilierten Stützplatte aufnehmen, die Anordnungen zur vorübergehenden Befestigung der Verbindung aufweisen, wobei die genannte Stütze (4) mit einer in der Translation im Verhältnis zu den Stangen (1) geführten Versetzungskapazität montiert ist, um die Verbindung zu schieben und den Auswurf des Geflügels hervorzurufen;
- ein Greif- und Beabstandungsorgan (6), das in der Lage ist, eine elastische Verbindung (5) in Form einer Schleife rund um den Träger und um das Geflügel zu verbringen;
- eine Steuermitteln unterworfene Klemme (P), um gemäß den Achsen X-Y-Z verschoben zu werden, um sukzessive:
• die elastische Verbindung (5) im Verhältnis zum Träger (S) nach oben zu ziehen;
• die Verbindung (5) einer Schwenkbewegung derart zu unterziehen, dass ihre Zweige deutlich in Form einer Acht gekreuzt werden;
• die Verbindung oberhalb der Brust auf Höhe des Brustbeinkamms zu positionieren;
• die Verbindung für ihr Einsetzen rund um die Karkasse und die Flügel abzusenken;
- einen schwenkbaren Haken (15), der geeignet ist, die Kreuzung der Zweige der Verbindung einzuspannen und teilweise in das Fleisch des Geflügels einzudringen.
- ein Mittel, um die Verbindung (5) auf der Höhe des Rückens zu schieben und gleichzeitig den Auswurf des Geflügels im Verhältnis zum genannten Träger (S) hervorzurufen.

2. Vorrichtung gemäß Anspruch 1, **dadurch gekennzeichnet, dass** der Träger (S) einen Teil (14) aufweist, der als Aufnahme für die Positionierung und die Aufnahme der Enden der Artikulationen der Schenkel und des Bürzels dienen.

3. Vorrichtung gemäß Anspruch 1, **dadurch gekennzeichnet, dass** die Klammer (P) einen rotierenden Kopf (7) mit Armen (8) und (9) aufweist, die mit einer Versetzungskapazität in der Höhe und zur Beabstandung montiert sind, wobei die Arme (8) und (9) an ihrer Basis mit Greiffingern (10) und (11) ausgerüstet sind, die mit der elastischen Verbindung (5) zusammenwirken.

4. Vorrichtung gemäß Anspruch 1, **dadurch gekennzeichnet, dass** auf der Höhe des freien Endes des Trägers Stütz-Gleitschuhe (12) und (13) angeordnet sind, die geeignet sind, mit den Flügeln zusammenzuwirken, um sie gegen die Brust gedrückt zu halten.

5. Vorrichtung gemäß Anspruch 1, **dadurch gekennzeichnet, dass** das Greif- und Beabstandungsorgan (6) Stangen (6a) umfasst, die ein geschlossenes Volumen begrenzen, das geeignet ist, den Abschnitt des Trägers und des Geflügels einzuspannen, wobei die genannten Stangen mehrere elastische Verbindungen in Form von Schleifen aufnehmen, wobei das Greif- und Beabstandungsorgan (6) Versetzungsmitteln in Translation unterworfen ist.

6. Anwendung der Vorrichtung gemäß Anspruch 1 bis 5 auf eine Maschine, umfassend einen Versorgungsposten eines Geflügels auf dem Träger (S), einen Halteposten und einen Auswurf- und Austragungsposten des gehaltenen Geflügels, wobei wenigstens ein Träger sukzessive an jedem der Posten ausgehend von einem Karussell präsentiert ist.

## Claims

1. An apparatus for the industrial clamping of poultry (V), which comprises:
- an open support (S) consisting of straight and parallel rods (1) that are spatially arranged in such a way as to form a supporting cradle that supports a fowl placed on its back. On part of their length, the rods (1) receive a profiled supporting plate (4), which has fittings for temporarily fastening the tie. This supporting plate (4) is mounted in such a way that it can execute guided translational motion along the rods (1) in order to push the tie and eject the fowl;
- a gripping and separating device (6) designed to loop an elastic tie (5) around the support and the fowl;
- a clamp (P) connected to control mechanisms that enable it to be displaced along the three X-Y-Z axes, so that the following steps can be carried out successively:
• stretching the elastic tie (5) upwards, away from the support (S);
• subjecting the tie (5) to a pivoting movement so as to visibly cross its strands in the form of a figure eight;
• positioning the tie above the breast, in line with the wishbone;
• lowering the tie so as to place it around the chest and the wings;
- a pivoting hook (15) capable of clamping the crossover point of the tie's strands and partially penetrating the fowl's flesh;
- a means of pushing the tie (5) to the back of the fowl, and concomitantly ejecting the fowl from the aforementioned support (S).

2. An apparatus according to Claim 1, **characterised by** the fact that the support (S) has a component (14) that acts as a holder for positioning and placing the ends of the thigh joints and the rump.

3. An apparatus according to Claim 1, **characterised by** the fact that the clamp (P) has a rotating head (7) with arms (8) and (9), which are mounted in such a way that they can move vertically and away from each other. At their base, the arms (8) and (9) are equipped with gripping fingers (10) and (11), and work with the elastic tie (5).

4. An apparatus according to Claim 1, **characterised by** the fact that at the free end of the support, there are supporting pads (12) and (13), which keep the wings pressed against the breast.

5. An apparatus according to Claim 1, **characterised by** the fact that the gripping and separating device (6) includes rods (6a) that define a closed volume that can contain the cross-section of the support and the fowl. The aforementioned rods receive several elastic ties in the form of loops, and the gripping and separating device (6) is provided with mechanisms for translational displacement.

6. Application of the apparatus according to any one of Claims 1 to 5 in a machine that includes a unit for supplying fowl to the support (S), a clamping unit, and an ejection and evacuation unit for the clamped fowl, with at least one support being presented successively to each of the units via a carousel.
